# EUROPÄISCHE PATENTSCHRIFT

(11) **EP 0 913 609 B1**
(45) Veröffentlichungstag und Bekanntmachung des Hinweises auf die Patenterteilung: **30.01.2002**
(21) Anmeldenummer: 98117933.6
(22) Anmeldetag: 22.09.1998
(51) Int. Cl.: F16K 31/00, F16K 1/34

(54) **Ventil**
Valve
Soupape

(30) Priorität: 31.10.1997 DE 19748263
(43) Veröffentlichungstag der Anmeldung: 06.05.1999
(73) Patentinhaber: Nass Magnet GmbH, 30179 Hannover (DE)
(72) Erfinder: Ossenbrügge, Jan-Peter, 30853 Langenhagen (DE); Hiddessen, Ralf, 31275 Lehrte (DE)
(74) Vertreter: Tetzner, Volkmar, Dr.-Ing. Dr. jur.

(56) Entgegenhaltungen:
- WO-A-97/09555
- DE-U- 29 706 194
- US-A- 3 510 100
- US-A- 4 340 083
- US-A- 4 783 047

## Beschreibung

Die Erfindung betrifft ein Ventil mit einem Gehäuse, einem Ventilsitz und einem im Gehäuse vorgesehenen Stellglied, das eine Dichtung aufweist, deren Dichtfläche in einer Schließstellung des Stellgliedes mit dem Ventilsitz in Kontakt kommt.

Zur Gewährleistung eines guten Schließkontaktes sind bereits Justiermöglichkeiten für den Ventilsitz vorgeschlagen worden. In der oberbegriffsmäßige WO97/09555 wird vorgeschlagen, den Ventilsitz an einem in einer Bohrung des Gehäuses verschiebbar eingesetzten Röhrchen vorzusehen, das nach einer Justierung in bezug auf die Dichtfläche beispielsweise verklebt wird. Bei dieser Art der Justierung ist es somit gewährleistet, daß die Dichtfläche im Schließkontakt mit dem Ventilsitz in Kontakt kommt.

Durch Verwendung einer entsprechend weichen Dichtung lassen sich weitere Fertigungstoleranzen ausgleichen, um einen dichten Verschluß des Ventilsitzes in der Schließstellung zu erreichen. Kommen jedoch Stellglieder zum Einsatz, die nur einen relativ geringen Hub, von beispielsweise 1/10 bis 2/10 mm aufweisen, müssen die Dichtungen wesentlich härter ausgeführt werden, um in der Öffnungsstellung den Ventilsitz in ausreichendem Maße freizugeben. Um auch bei einer derartigen Ausbildung des Ventils einen dichten Verschluß des Ventils in der Schließstellung zu erreichen, müssen Ventilsitz und Dichtfläche möglichst gut aufeinander ausgerichtet sein.

Der Erfindung liegt daher die Aufgabe zugrunde, das Ventil gemäß dem Oberbegriff des Anspruches 1 dahingehend zu verbessern, daß auch bei geringen Hüben des Stellgliedes ein dichter Verschluß des Ventilsitzes in der Schließstellung erreicht werden kann.

Erfindungsgemäß wird diese Aufgabe durch das kennzeichnende Merkmal des Anspruches 1 gelöst, indem der Ventilsitz bei der Justierung auch in einem Winkelbereich derart verstellbar ist, daß der Ventilsitz in der Schließstellung plan auf der Dichtfläche aufliegt.

Weitere Ausgestaltungen der Erfindung sind Gegenstand der Unteransprüche.

In einem bevorzugten Ausführungsbeispiel ist der Ventilsitz bei der Justierung lose in einer am Gehäuse befestigten Hülse geführt und wird nach der Justierung mit der Hülse verklebt.

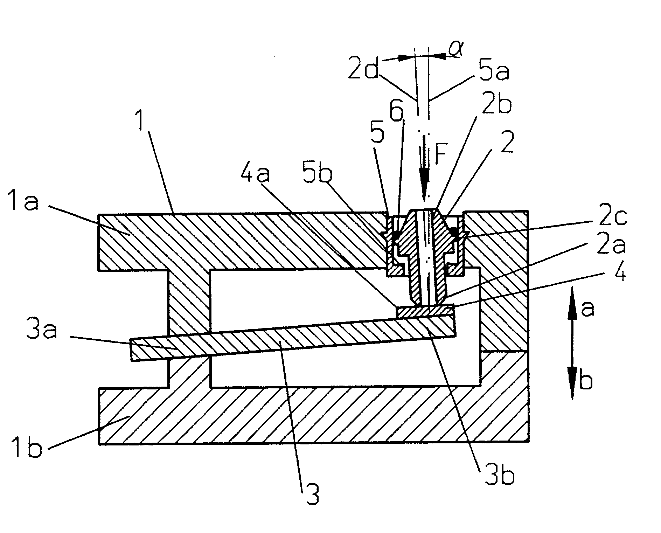

Weitere Vorteile und Ausgestaltungen der Erfindung werden anhand der nachfolgenden Beschreibung und der Zeichnung näher erläutert.

Das dargestellte Ventil besteht im wesentlichen aus einem Gehäuse 1, einem Ventilsitz 2 und einem im Gehäuse vorgesehenen Stellglied 3, das eine Dichtung 4 aufweist, deren Dichtfläche 4a in der gezeigten Schließstellung des Stellgliedes 3 mit dem Ventilsitz 2 in Kontakt kommt.

Das Gehäuse 1 wird im dargestellten Ausführungsbeispiel durch eine obere und untere Gehäusehälfte 1a, 1b gebildet. Das Stellglied ist mit seinem einen Ende 3a zwischen diesen beiden Gehäusehälften eingeklemmt, während das andere Ende 3b die Dichtung 4 trägt. Das eingeklemmte Ende 3a kann zusätzlich auch in einer Vergußmasse eingebettet werden.

Das Stellglied 3 wird im dargestellten Ausführungsbeispiel durch ein piezoelektrisches Biegeelement gebildet. Es könnte beispielsweise aber auch ein Magnet als Aktor verwendet werden.

Zur Führung und Halterung des Ventilsitzes 2 ist am Gehäuse 1 eine Hülse 5 befestigt. Die Hülse 5 wird beispielsweise in eine Bohrung des Gehäuses eingedrückt.

In der zylindrisch ausgebildeten Hülse 5 ist das Ventilstück 2 bei der Justierung zunächst lose geführt. Das Stellglied 2 ist im wesentlichen röhrenförmig mit einem ersten und einem zweiten Ende 2a, 2b ausgebildet, wobei das erste Ende 2a mit der Dichtfläche 4a in Kontakt kommt und ferner in einem Bereich zwischen den beiden Enden 2a, 2b ein umlaufender, wulstartiger Ansatz 2c vorgesehen ist. Dieser wulstartige Ansatz 2c weist somit einen wesentlich größeren Durchmesser als die übrigen Bereiche des Stellgliedes 2a auf.

Der Durchmesser des wulstartigen Ansatzes 2c ist geringfügig kleiner als der Innendurchmesser der Hülse 5.

Die Hülse 5 weist eine Mittelachse 5a auf, in deren Richtung der Ventilsitz 2 verschiebbar ist. Indem der Ventilsitz 2, abgesehen vom wulstartigen Ansatz 2a, einen im Vergleich zum Innendurchmesser der Hülse 5 wesentlich kleineren Außendurchmesser aufweist, ist der Ventilsitz 2 auch in einem Winkelbereich verstellbar. Im dargestellten Ausführungsbeispiel weist der Ventilsitz 2 eine Mittelachse 2d auf, die mit der Mittelachse 5a der Hülse einen Winkel α einschließt.

Indem das Stellglied 2 nicht nur in Längsrichtung der Mittelachse 5a, sondern auch in einem bestimmten Winkelbereich verstellbar ist, läßt sich der Ventilsitz 2 derart einstellen, daß er in der gezeigten Schließstellung mit seinem unteren Ende 2a plan auf der Dichtfläche 4a aufliegt.

Bedingt durch Fertigungstoleranzen und/oder durch die Ausbildung des Stellgliedes ist die Dichtfläche 4a üblicherweise nicht senkrecht zur Mittelachse 5a der Hülse ausgebildet. Zur Verdeutlichung dieses Effektes ist das Stellglied 3 im dargestellten Ausführungsbeispiel in übertrieben dargestellter Weise schief eingebaut. Wäre das Stellglied 2 nur in Richtung der Mittelachse 5a verstellbar, würde der Ventilsitz 2 nicht plan auf der Dichtfläche 4a aufliegen. Diese Ungenauigkeit müßte dann durch eine entsprechend weiche Dichtung 4 ausgeglichen werden, um einen dichten Ventilsitz zu gewährleisten. Ist der Hub des Stellgliedes 3 im Bereich der Dichtung 4 nur sehr gering, beispielsweise nur 1/10 mm, so muß die Dichtung 4 relativ hart ausgebildet sein. Um auch in diesem Fall eine ausreichende Abdichtung des Ventilsitzes 2 zu gewährleisten, ist der Ventilsitz bei der Justierung auch in einem Winkelbereich derart verstellbar.

Bei der Justierung des Ventilsitzes 2 wird dieser in die Hülse 5 eingeführt und mit seinem ersten Ende 2a direkt auf die Dichtfläche 4a aufgelegt und in dieser Position durch Kleben befestigt. Der Klebstoff 6 wird dabei hauptsächlich im Bereich des wulstartigen Ansatzes 2a und der inneren Wandung der Hülse 5 aufgebracht. Um ein Durchlaufen des Klebers 6 ins Gehäuseinnere weitgehend zu vermeiden, sollte der Außendurchmesser des wulstartigen Ansatzes 2c nur geringfügig kleiner als der Innendurchmesser der Hülse 5 sein. Des weiteren darf auch die Erstreckung des wulstartigen Ansatzes 2a in Richtung der Mittelachse 2d nur sehr gering sein, um einen möglichst großen Kippwinkel α gegenüber der Mittelachse 5a zu ermöglichen.

Um das Hineinlaufen des Klebstoffes 6 in das Gehäuseinnere zu vermeiden, kann die Hülse 5, wie im dargestellten Ausführungsbeispiel, an dem dem Gehäuseinneren zugewandten Ende einen sich in Richtung der Mittelachse 5a erstreckenden flanschartigen Ansatz 5b aufweisen.

Während das Gehäuse beispielsweise aus Kunststoff besteht, sollten die Hülse 5 und der Ventilsitz 2 zweckmäßigerweise aus Metall gefertigt werden. Durch die Fertigung aus Metall sind für den Spalt zwischen wulstartigem Ansatz 2a und Hülse wesentlich geringere Toleranzen möglich, so daß ein starkes Durchlaufen des Klebers 6 in das Ventil verhindert werden kann.

Die Justierung des Ventilsitzes 2 kann allein durch Schwerkraft oder durch eine zusätzliche externe Kraft F erfolgen. Das Auflegen und Ausrichten des Ventilsitzes 2 vor dem Verkleben kann durch eine Rüttelbewegung durch das Stellglied selbst (pulsierende Erregungsspannung) oder durch eine externe Erregung begünstigt werden.

Das Einstellen einer mechanischen Vorspannung kann auβer durch eine externe Kraft F auch durch Auslenkung des Stellgliedes in Richtung des Pfeils b erreicht werden.

Sofern das Stellglied 3 in seiner Ruhestellung einen bestimmten Abstand vom Ventilsitz 2 aufweisen soll, kann die Justierung des Ventilsitzes 2 durch Auflegen eines Distanzstückes auf die Dichtfläche 4a erfolgen. Eine weitere Möglichkeit, einen bestimmten Abstand einzustellen, besteht darin, das Stellglied in Richtung des Pfeiles a auszulenken.

Sobald der Ventilsitz 2 ausgerichtet ist, wird dieser mit Klebstoff 6 in seiner Lage in der Hülse 5 fixiert.

Um das Verkleben von Teilen im Innenraum des Ventils zu verhindern kann anstatt oder zusätzlich zum Ansatz 5b der Hülse auch ein UV-Licht härtender Klebstoff verwendet werden, wobei der Innenraum des Ventils mit UV-Licht ausgeleuchtet wird, das ein sofortiges Aushärten des durchlaufenden Klebstoffes gewährleistet.

## Patentansprüche

1. Ventil mit einem Gehäuse (1), einem Ventilsitz (2) und einem im Gehäuse vorgesehenen Stellglied (3), das eine Dichtung (4) aufweist, deren Dichtfläche (4a) in einer Schließstellung des Stellgliedes mit dem Ventilsitz in Kontakt kommt und wobei der Ventilsitz bei der Justierung relativ zur Dichtfläche verschiebbar am Gehäuse gehaltert ist,
**dadurch gekennzeichnet, daß** der Ventilsitz (2) bei der Justierung auch in einem Winkelbereich (α) derart verstellbar ist, daß der Ventilsitz in der Schließstellung plan auf der Dichtfläche (4a) aufliegt.

2. Ventil nach Anspruch 1, **dadurch gekennzeichnet, daß** der Ventilsitz (2) nach der Justierung in seiner Lage relativ zum Gehäuse fixiert ist.

3. Ventil nach Anspruch 1, **dadurch gekennzeichnet, daß** der Ventilsitz (2) bei der Justierung lose in einer am Gehäuse befestigten Hülse (5) geführt ist.

4. Ventil nach Anspruch 1, **dadurch gekennzeichnet, daß** der Ventilsitz (2) röhrchenförmig mit einem ersten und einem zweiten Ende (2a, 2b) ausgebildet ist, wobei ein Ende (2a) mit der Dichtfläche (4a) in Kontakt kommt und ferner in einem Bereich zwischen den beiden Enden ein umlaufender, wulstartiger Ansatz (2c) vorgesehen ist.

5. Ventil nach Anspruch 3 und 4, **dadurch gekennzeichnet, daß** der Ventilsitz (2) nach der Justierung im Bereich des wulstartigen Ansatzes (2c) mit der Hülse (5) verklebbar ist.

6. Ventil nach Anspruch 3, **dadurch gekennzeichnet, daß** die Hülse (5) an dem dem Gehäuseinneren zugewandten Ende einen flanschartigen, umlaufenden Ansatz aufweist.

7. Ventil nach Anspruch 1, **dadurch gekennzeichnet, daß** das Stellglied (3) durch ein piezoelektrisches Biegeelement gebildet wird.

8. Ventil nach Anspruch 5, **dadurch gekennzeichnet, daß** zum Verkleben des Ventilsitzes (2) ein UV-Licht härtender Klebstoff verwendet wird.

## Claims

1. Valve with a housing (1), a valve seat (2) and a setting member (3) which is provided in the housing and has a seal (4), the sealing surface (4a) of which comes into contact with the valve seat in the closed position of the setting member, and wherein during the adjustment the valve seat is retained on the housing so as to be displaceable relative to the sealing surface, **characterised in that** during the adjustment the valve seat (2) is also movable in an angular range (α) in such a way that the valve seat rests flat on the sealing surface (4a) in the closed position.

2. Valve as claimed in Claim 1, **characterised in that** after the adjustment the valve seat (2) is fixed in its position relative to the housing.

3. Valve as claimed in claim 1, **characterised in that** during the adjustment the valve seat (2) is loosely guided in a bush (5) fixed on the housing.

4. Valve as claimed in Claim 1, **characterised in that** the valve seat (2) is of tubular construction with a first and a second end (2a, 2b), wherein one end (2a) comes into contact with the sealing surface (4a) and furthermore a circumferential bead-like projection (2c) is provided in the region between the two ends.

5. Valve as claimed in Claims 3 and 4, **characterised in that** after the adjustment the valve seat (2) can be glued in the region of the bead-like projection (2c) to the bush (5).

6. Valve as claimed in claim 3, **characterised in that** the bush (5) has a flange-like circumferential projection on the end facing the interior of the housing.

7. Valve as claimed in Claim 1, **characterised in that** the setting member (3) is formed by a piezoelectric bending element.

8. Valve as claimed in Claim 5, **characterised in that** a UV light hardening glue is used for glueing the valve seat (2).

## Revendications

1. Soupape comportant un boîtier (1), un siège de soupape (2) et un organe de positionnement (3) prévu dans le boîtier et présentant un joint d'étanchéité (4) dont la surface d'étanchéité (4a) vient en contact avec le siège de soupape dans une position de fermeture de l'organe de positionnement, et dans laquelle le siège de soupape est maintenu sur le boîtier de façon mobile en translation par rapport à la surface d'étanchéité pendant l'ajustage, **caractérisée en ce que** le siège de soupape (2) est réglable, lors de l'ajustage, également dans une plage angulaire (α) de telle sorte que le siège de soupape s'applique à plat sur la surface d'étanchéité (4a) dans la position de fermeture.

2. Soupape selon la revendication 1, **caractérisée en ce que**, après l'ajustage, le siège de soupape (2) est fixé dans sa position par rapport au boîtier.

3. Soupape selon la revendication 1, **caractérisée en ce que** lors de l'ajustage, le siège de soupape (2) est guidé de façon lâche dans une douille (5) fixée sur le boîtier.

4. Soupape selon la revendication 1, **caractérisée en ce que** le siège de soupape (2) est réalisé en forme tubulaire avec une première et une deuxième extrémité (2a, 2b), une extrémité (2a) venant en contact avec la surface d'étanchéité (4a), et un talon périphérique (2c) en forme de bourrelet étant prévu en outre dans une zone entre les deux extrémités.

5. Soupape selon les revendications 3 et 4, **caractérisée en ce que**, après l'ajustage, le siège de soupape (2) peut être collé avec la douille (5) dans la zone du talon (2c) en forme de bourrelet.

6. Soupape selon la revendication 3, **caractérisée en ce que** la douille (5) comprend un talon périphérique en forme de bride, à l'extrémité tournée vers l'intérieur du boîtier.

7. Soupape selon la revendication 1, **caractérisée en ce que** l'organe de positionnement (3) est formé par un élément flexible piézo-électrique.

8. Soupape selon la revendication 5, **caractérisée en ce que** pour coller le siège de soupape (2), on utilise une colle durcissant à la lumière ultraviolette.
